# EUROPEAN PATENT SPECIFICATION

(11) **EP 1 747 950 B1**
(45) Date of publication and mention of the grant of the patent: **07.01.2015**
(21) Application number: 06014708.9
(22) Date of filing: 14.07.2006
(51) Int. Cl.: B60R 21/231, B60R 21/00

(54) **Airbag and airbag system**
Airbag und Airbagvorrichtung
Coussin gonflable et dispositif de coussin gonflable

(30) Priority: 29.07.2005 JP 2005221247
(43) Date of publication of application: 31.01.2007
(73) Proprietor: TAKATA CORPORATION, Minato-ku, Tokyo 106-8510 (JP)
(72) Inventor: Onohara, Keisuke, Tokyo 106-8510 (JP); Nakagawa, Motokazu, Tokyo 106-8510 (JP)
(74) Representative: Vossius & Partner

(56) References cited:
- DE-A1- 19 519 998
- US-A1- 2002 017 774
- PATENT ABSTRACTS OF JAPAN vol. 2000, no. 25, 12 April 2001 (2001-04-12) & JP 2001 233157 A (TAKATA CORP), 28 August 2001 (2001-08-28)

## Description

The present invention relates to an airbag and an airbag system for use in automobiles and so forth.

### [Background Art]

It is known to provide a driver-seat airbag system to a steering wheel and a passenger airbag system to an instrument panel in front of a passenger seat to restrain the occupants of an automobile in a collision.

US 2002/017774 A1 provides an inflatable airbag for installation in front of a passenger compartment of a vehicle for protecting an occupant during an emergency, comprising, when expanded, a rearwardly directed surface positioned to be contacted by the occupant, laterally spaced side surfaces, and inwardly extending depressions formed in a middle portion of each side surface of the airbag as viewed in a vertical direction. The depressions make it difficult for the gas in the lower portion of the bag to move upward so that the resistance of a lower portion of the bag acts uniformly with respect to the lower portion of the upper body (from the waist to the chest) of an occupant.

DE 195 19 998 A1 relates to an air bag module, in particular a passenger air bag, having a gas bag and a gas generator. The gas bag has at least one area with a smaller cross-section than at least another area. In particular, the gas bag has a smaller cross-section in the area of the gas generator and/or inflating aperture and a large volume in the front part facing the occupant, so that when the gas bag is inflated, it is pear-shaped or bone-shaped.

JP 2001 233157 A relates to an airbag comprising an indentation near the center of a contact surface thereof. The indentation is in the shape of a recess or a valley to form the airbag into a heart-like shape. The area including the indentation is at least greater than an area coming in contact with the face of an occupant. The deepest point of the dent (the farthest point from the occupant in the contact surface) is positioned below the jaw of the occupant. The contact surface extending from the deepest point of the dent to the upper projection top thereof overhangs toward the occupant to have an angle between 0° and 45° relative to the cervical vertebrae axis of the occupant.

As an airbag system that receives the arms of an occupant with an airbag to restrain the occupant in a collision, an airbag system having a driver-seat airbag and arm bags disposed on the right and left of the lower part of the driver-seat airbag is disclosed in JP 2003 182500 A (Patent Document 1). However, the airbag system uses three airbags in total, so that it may increase in cost.

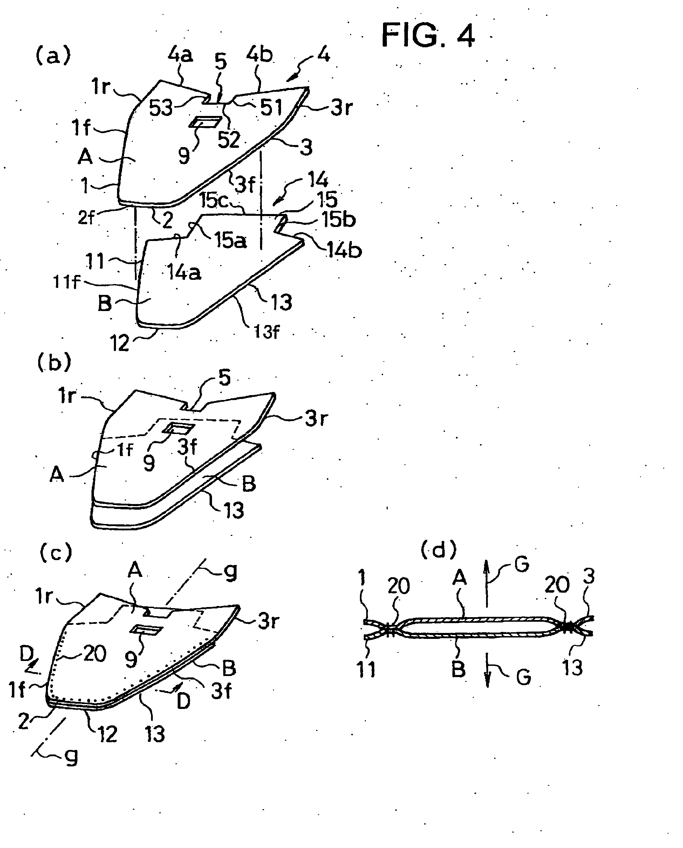

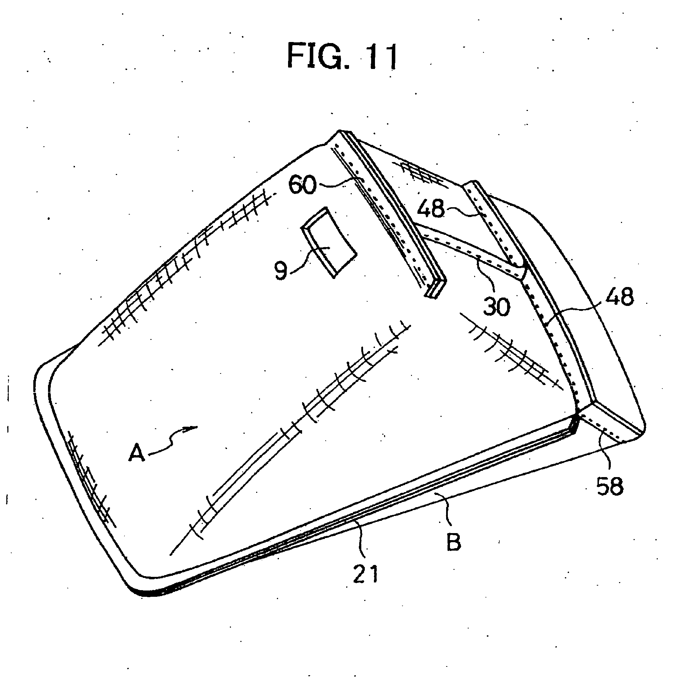

One example is an airbag constructed of two front and rear panels. Figs. 11 to 18 of JP 2000 25544 A (Patent Document 2) describe an airbag having a large thickness in an inflated state and a procedure for sewing it. The airbag and its sewing procedure will now be described with reference to Figs. 4 to 11 contained in the attached drawings of the specification.

According to Claim 2 of the reference,

"An airbag comprising two substantially trapezoidal panels A and B sewn together, wherein
the panel A has a side 2 corresponding to the upper side of the trapezoid, a side 4 corresponding to the bottom of the trapezoid, and sides 1 and 3 corresponding to the hypotenuses of the trapezoid, the side 4 having a rectangular cut 5 in the center;
the panel B has a side 12 corresponding to the upper side of the trapezoid, a side 14 corresponding to the bottom of the trapezoid, and sides 11 and 13 corresponding to the two hypotenuses of the trapezoid, the side 14 having a rectangular projection 15 in the center;
the projection 15 having sides 15a and 15b continuing to the side 14, and a side 15c connecting the sides 15a and 15b,
the side 1 of the panel A having a side 1f overlapping the side 11 of the panel B and a side 1r extending therefrom;
the side 3 of the panel A having a side 3f overlapping the side 13 of the panel B and a side 3r extending therefrom;
the side 4 of the panel A having sides 4a and 4b on both sides of the rectangular cut 5;
the rectangular cut 5 having sides 51 and 53 continuing to the sides 4a and 4b and a side 52 connecting the sides 51 and 53;
the side 14 of the panel B having sides 14a and 14b between the both sides 15a and 15b of the projection 15 and the sides 11 and 13;
the panels A and B being sewn up with a seam 20 along the sides 1f and 11, the sides 2 and 12, and the sides 3f and 13;
the part along the side 4a and the part along the side 4b of the panel A being sewn up with a seam 30;
the part along the side 15a and the part along the side 14a of the panel B being sewn up with a seam 58;
the part along the side 15b of the panel A and the part along the side 14b of the panel B being sewn up with the seam 58;
the part along the sides 1r and 3r of the panel A and the part along the side 15c of the panel B being sewn up with a seam 48;
the part along the sides 51 and 53 of the rectangular cut 5 and the part along the side 52 of the panel A being sewn up with a seam 60."

To manufacture the airbag, as shown in Figs. 4(a) and 4(b), the two panels A and B are cut out from a ground fabric and placed one on another. The panel A has the shape of an approximate trapezoid having four sides 1, 2, 3, and 4. The side 4 corresponding to the bottom of the trapezoid is curved in substantially elbowed shape, in the center of which the rectangular cut 5 is provided. The side 4 of the panel A has sides 4a and 4b on both sides of the rectangular cut 5. The rectangular cut 5 has sides 51 and 53 that continue to the sides 4b and 4a, respectively, and a side 52 that connects the sides 51 and 53.

The sides 1 and 3 corresponding to the hypotenuses of the trapezoid have front sides 1f and 3f and rear sides 1r and 3r, respectively. The sides 1f and 3f are substantially equal in length to the sides 11 and 13.

The panel A has a gas port 9.

The panel B has the shape of an approximate trapezoid having four sides 11, 12, 13, and 14. The side 14 corresponding to the bottom of the trapezoid has a projection 15. Reference numerals 15a and 15b indicate sides continuing to the side 14 of the projection 15. Numeral 15c denotes a side connecting the sides 15a and 15b. Numerals 14a and 14b indicate parts of the side 14 extending to both sides of the projection 15.

The panels A and B have been put one on another such that the sides 1f and 11, the sides 2f and 12, and the sides 3f and 13 agree with each other, and are sewn up along the sides 1 to 3 and 11 to 13, as shown in Figs. 4(c) and 4(d). Numeral 20 indicates a seam thereof. The sides 1r and 3r extend off the sides 11 and 13, respectively, so that they are not sewn to the sides 11 and 13. Fig. 4(d) is a cross sectional view taken along line D-D of Fig. 4(c).

The panels A and B of the sewn body are drawn along the arrow G of Fig. 4(d).

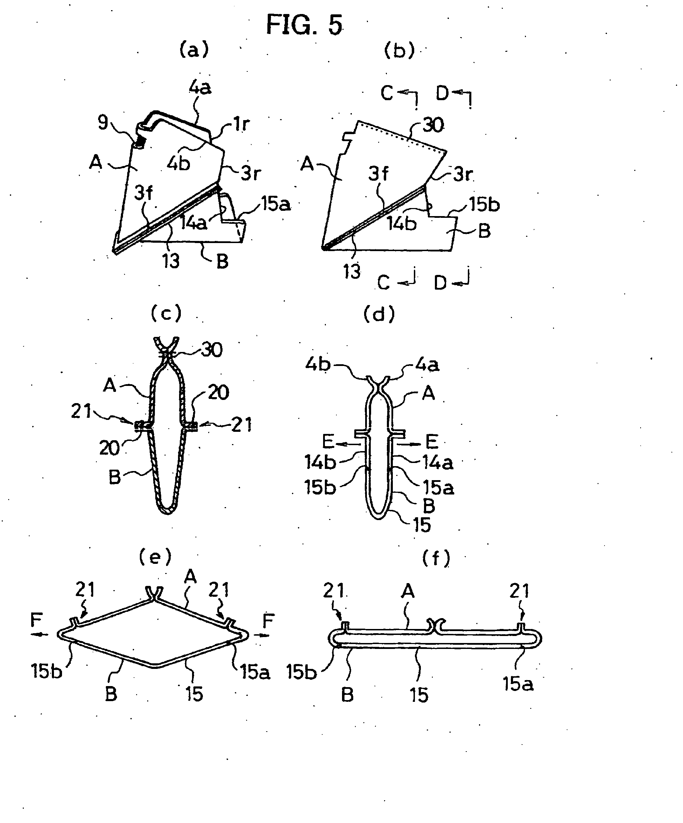

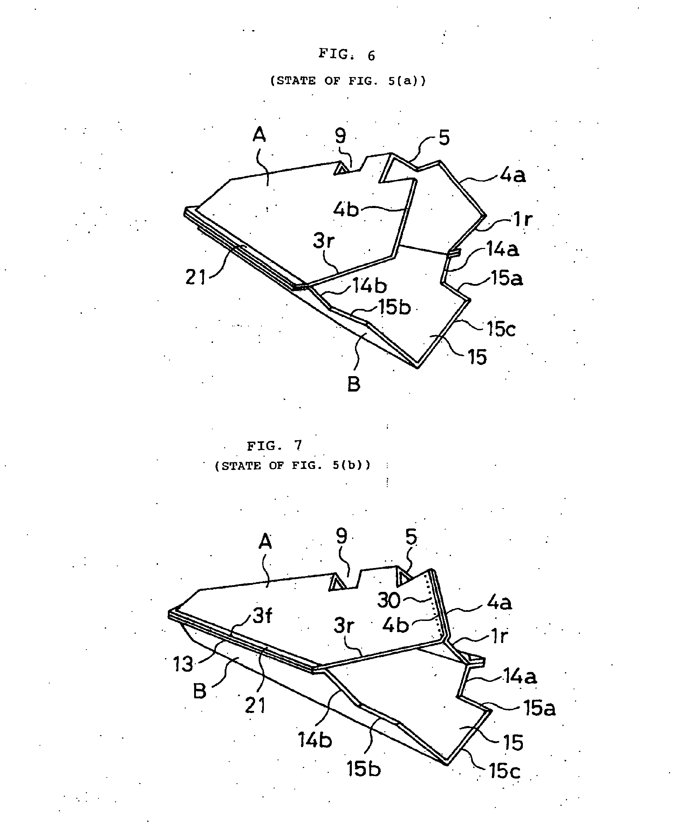

Thus, as shown in Figs. 5(a) and 6, the panel A is folded in two along the center line g in Fig. 4(c), so that the sides 4a and 4b agree with each other. The panel B is also folded in two along the center line g, and the projection 15 is also folded in two, so that the sides 15a and 15b agrees with each other, and also the sides 14a and 14b agree with each other. Then, as shown in Figs. 5(b) and 7, the parts of the panel A along the sides 4a and 4b are sewn up. Numeral 30 indicates a seam along the sides 4a and 4b.

Fig. 5(c) is a cross-sectional view taken along line C-C of Fig. 5(b); Fig. 5(d) is a cross-sectional view taken along arrow D-D of Fig. 5(b).

As shown in Fig. 5(c), the sewing portions 21, 21 with the seam 20 are disposed outside the bag.

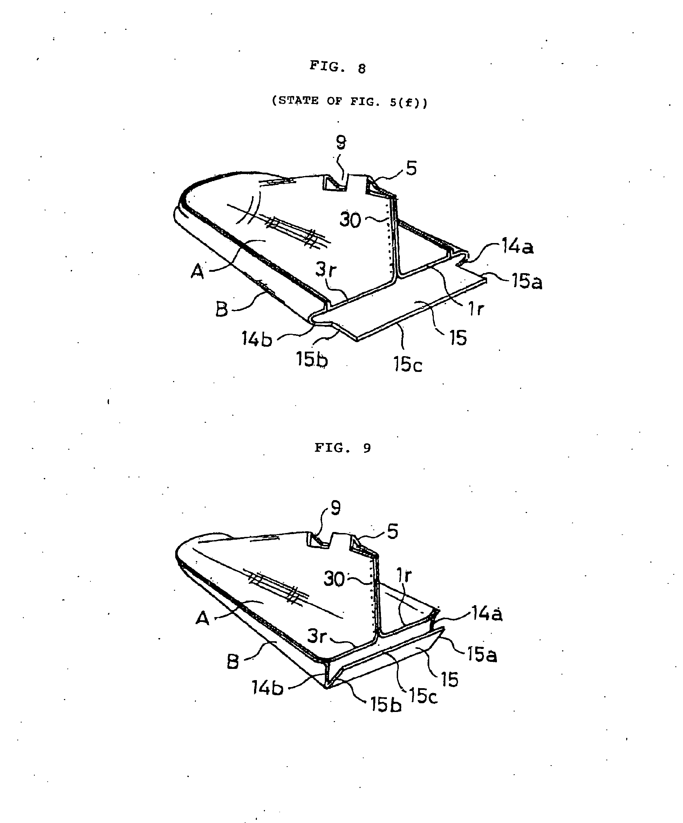

The panels A and B of the sewn bag are drawn along arrow E in Fig. 5(d) and as such, are brought into the state shown in Fig. 5(e). They are further drawn along arrow F in Fig. 5(e) into the state shown in Figs. 5(f) and 8, in which the sides 1r and 3r of the panel A are brought into a straight line.

As shown in Figs. 9 and 11, the side 15c of the projection 15 is sewn on the sides 1r and 3r of the panel A with a seam 48, and the sides 15a and 14a and the sides 15b and 14b are sewn up with a seam 58, respectively.

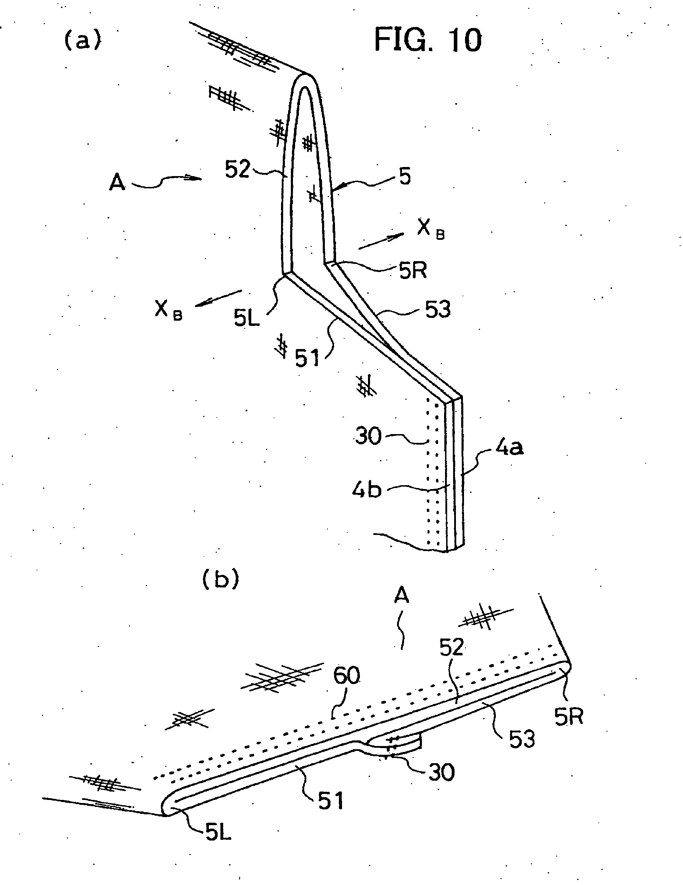

Subsequently, as shown in Fig. 10(a), the left and right corners 5L and 5R of the rectangular cut 5, at which the sides 52 and 51, and the sides 52 and 53 intersect, respectively, are drawn along line X_{B}-X_{B}. As shown in Fig. 10(b), the panel A is then sewn up along the sides 51, 52, and 53. Numeral 60 indicates a seam thereof.

Thus, the airbag shown in Fig. 11 is completed.

Accordingly, it is an object of the present invention to provide an airbag capable of receiving occupant's arms at low cost.

This object is achieved with the features of the claims.

According to the present invention, in an airbag inflating vertically in front of an occupant, the lateral width of the lower part during inflation is larger than that of a part above the lower part.

The airbag has an intermediate part and upper and lower parts, the intermediate part having a relatively small lateral width, and the upper and lower parts having a lateral width larger than that of the intermediate part during inflation; and the relationship is expressed as W₂ < W₁ < W₃, where W₁ is the maximum lateral width of the upper part, W₂ is the minimum lateral width of the intermediate part, and W₃ is the maximum lateral width of the lower part.

Preferably, W₁ is larger than W₂ by 50 to 100 mm, and W₃ is larger than W₁ by 100 to 150 mm.

According to the present invention, an airbag system includes said airbag and an inflator for inflating the airbag.

With the airbag and the airbag system according to the invention, the lateral width of the lower part of the airbag is large, with which the arms of an occupant can be received. The airbag and the airbag system according to the invention does not need an arm bag, and so can be manufactured at low cost. Furthermore, because the upper part and intermediate part of the airbag are smaller in lateral width than the lower part, the volume of the airbag can be smaller than that for the case where the whole airbag has a large lateral width.

The lateral width of the upper part is larger than that of the intermediate part, so that the performance in restraining the head of an occupant can be improved.

An embodiment of the present invention will be described hereinbelow with reference to the drawings:

Fig. 1 is a front view of a passenger airbag 80 according to an embodiment of the present invention;
Fig. 2(a) is a front view of a rear panel of the airbag; and Fig. 2(b) is a front view of a front panel of the airbag;
Fig. 3 is a perspective view showing the engaging relationship between the rear panel and the front panel;
Fig. 4 is a diagram showing the procedure for sewing an airbag according to JP 2000 25544 A;
Fig. 5 is a diagram showing the procedure for sewing an airbag according to JP 2000 25544 A;
Fig. 6 is a diagram showing the procedure for sewing an airbag according to JP 2000 25544 A;
Fig. 7 is a diagram showing the procedure for sewing an airbag according to JP 2000 25544 A;
Fig. 8 is a diagram showing the procedure for sewing an airbag according to JP 2000 25544 A;
Fig. 9 is a diagram showing the procedure for sewing an airbag according to JP 2000 25544 A;
Fig. 10 is a diagram showing the procedure for sewing an airbag according to JP 2000 25544 A;
Fig. 11 is a perspective view of the airbag sewn according to JP 2000 25544 A.

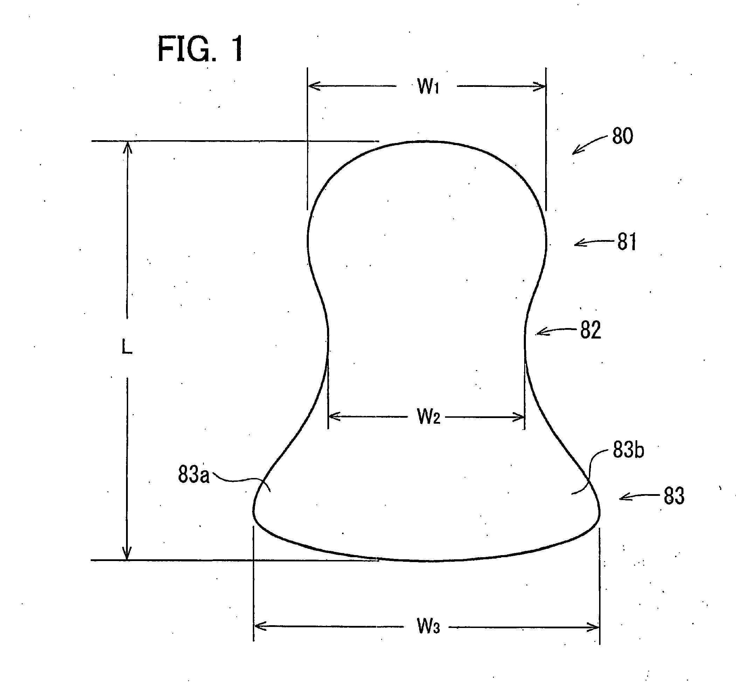

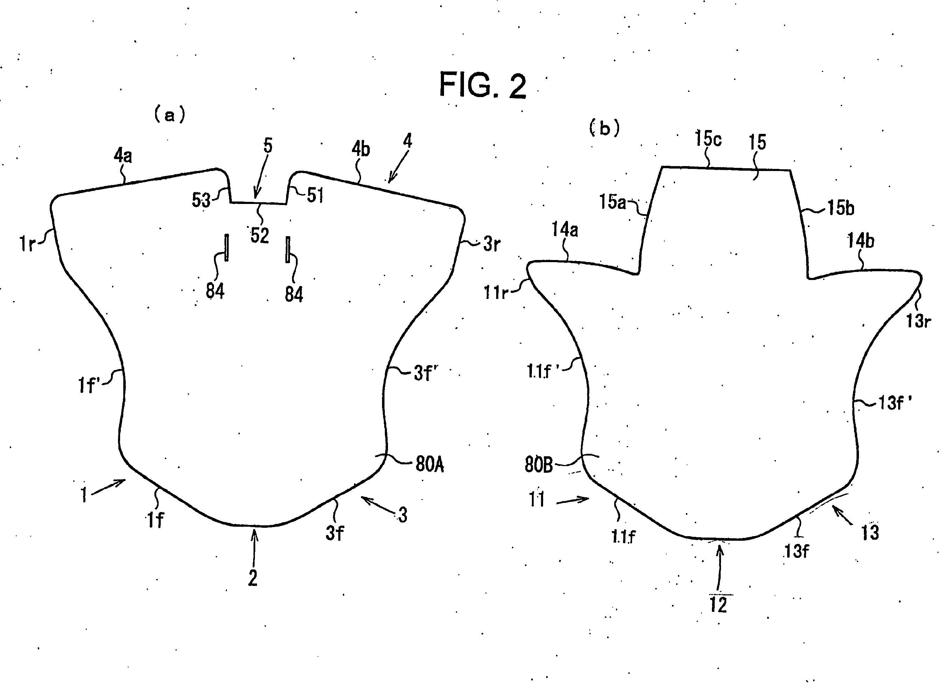

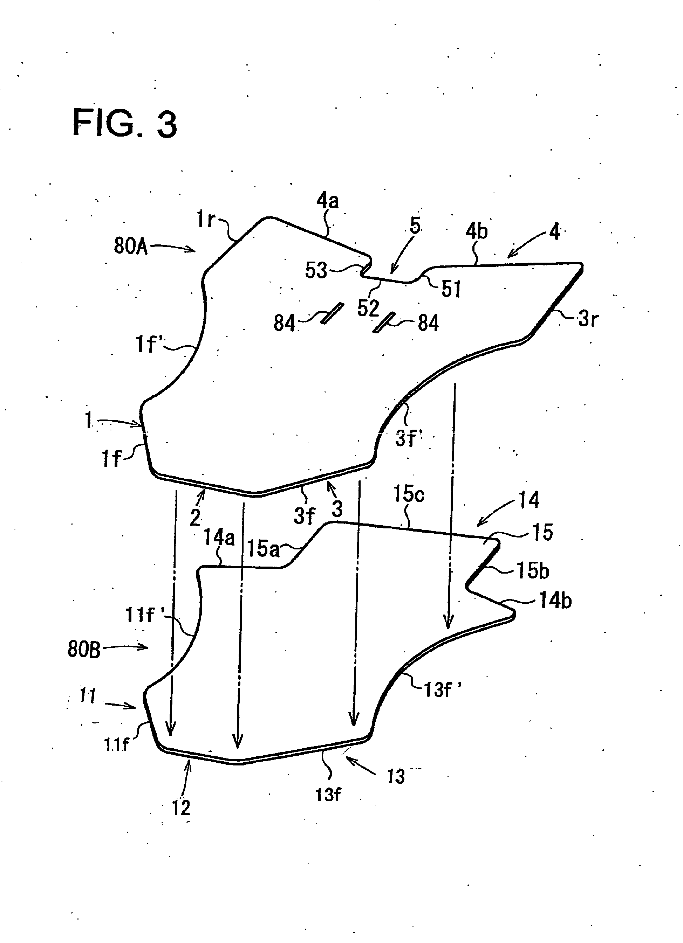

Figs. 1 to 3 show an embodiment of the invention.

With the airbag 80 inflated in front of a passenger, the minimum lateral width W₂ of an intermediate part 82 is the minimum, the maximum lateral width W₁ of an upper part 81 is larger than W₂, and the maximum lateral width W₃ of a lower part 83 is larger than W₁. That is, the lateral width of the airbag 80 has a relationship W₂ < W₁ < W₃. Preferably, W₁ is larger than W₂ by 50 to 100 mm, and W₃ is larger than W₁ by 100 to 150 mm. Preferably, W₂ is within the range of 350 to 400 mm, and the vertical length L of the airbag 80 is within the range of 700 to 750 mm.

The airbag 80 can receive occupant's arms with laterally projecting portions 83a and 83b of the lower part 83. The lateral widths of the intermediate part 82 and the upper part 81 are smaller than that of the lower part 83, and the lateral width of the intermediate part 82 is smaller than that of the upper part 81, so that the airbag 80 is small in volume. Thus, a low-capacity inflator can be used.

The airbag 80 according to the embodiment can provide good performance in restraining the head of the occupant, because the lateral width of the upper part 81 is larger than that of the intermediate part 82.

The airbag 80 can be manufactured by sewing up the peripheries of a rear panel 80A and a front panel 80B. Since the shapes of the rear panel 80A and the front panel 80B are substantially the same as those of the panels A and B shown in Fig. 4, the same components are given the same reference numerals. The difference between the panels 80A and 80B and the panels A and B is that: for the panels A and B, the respective front sides 1f, 3f, 11f, and 13f of the sides 1, 3, 11, and 13 are linear; for the panels 80A and 80B, the front of the sides 1, 3, 11, and 13, contiguous to the forefront linear sides 1f, 3f, 11f, and 13f, form curves 1f', 3f', 11f', and 13f' curved to the center of the panels 80A and 80B.

The rear panel 80A has a pair of parallel slits 84, 84 in place of the opening 9. An inflator is disposed in the airbag 80 through the slits 84, 84.

The method of sewing up the panels 80A and 80B is completely the same as for the panels A and B shown in Figs. 4 to 11. Since the curves 1f', 3f', 11f', and 13f' are provided, the intermediate part 82 with a small lateral width can be formed. Since the lateral widths of the sides If and 3f are smaller than those of the sides 1r and 3r, and the lateral widths of the sides 11f and 13f are smaller than those of the sides 11r and 13r, the lateral width of the upper part 81 can be made smaller than that of the lower part 83.

## Claims

1. An airbag inflating vertically in front of an occupant,
wherein
the airbag has an intermediate part (82) and upper and lower parts (81, 83), the intermediate part (82) having a relatively small lateral width (W2), and the upper and lower parts (81, 83) having a lateral width (W1, W3) larger than that of the intermediate part (82) during inflation; and
the lateral width has a relationship expressed as W2 < W1 < W3
where W1 is the maximum lateral width of the upper part (81),
W2 is the minimum lateral width of the intermediate part (82), and
W3 is the maximum lateral width of the lower part (83), wherein:
a) the airbag has two panels only, namely a front panel (80B) and a rear panel (80A),
b) said front panel (80B) and said rear panel (80A) each having sides (1, 2, 3, 11, 12, 13) with:
b1) forefront linear sides (1f, 3f, 11f, 13f),
b2) fronts (1f', 3f', 11f', 13f') of the sides (1, 3, 11, 13), said fronts being contiguous to the forefront linear sides (1f, 3f, 11f, 13f) and being curved toward the centers of the front and rear panels (80B, 80A), respectively, and
b3) rear sides (1r, 3r, 11r, 13r) extending from the curved fronts (1f', 3f', 11f', 13f'),
c) said front panel (80B) further comprising a side (14) having:
c1) a rectangular projection (15) in the center, the projection (15) having sides (15a, 15b) continuing to said side (14) of the front panel (80B), and a side (15c) connecting the sides (15a, 15b) of the projection (15), and
c2) sides (14a, 14b) between both sides (15a, 15b) of the projection (15) and the rear sides (11r, 13r), said sides (14a, 14b) being sewn up with the adjacent sides (15a, 15b) of the projection (15),
d) said rear panel (80A) further comprising a side (4) extending from the rear sides (1r, 3r) and having:
d1) a rectangular cut (5) in the center and
d2) sides (4a, 4b) on both sides (51, 53) of the cut (5), said sides (4a, 4b) on both sides (51, 53) of the cut (5) being sewn together,
e) the front panel (80B) and the rear panel (80A) being sewn together along their peripheries with
e1) seams (20, 21) connecting the forefront linear sides (1f, 3f, 11f, 13f) and the curved fronts (1f', 3f', 11f', 13f') of the front panel (80B) and the rear panel (80A), wherein, since the curved fronts (1f', 3f', 11f', 13f') are provided, the intermediate part (82) with a small lateral width (W2) can be formed, and
e2) a seam (48) connecting the rear panel (80A) at the rear sides (1r, 3r) extending from the curved fronts (1f', 3f') and the front panel (80B) at the side (15c) connecting the sides (15a, 15b) of the projection (15).

2. The airbag according to claim 1, wherein W1 is larger than W2 by 50 to 100 mm, and W3 is larger than W1 by 100 to 150 mm.

3. The airbag according to claim 1 or 2, wherein the lower part (83) comprises laterally projecting portions (83a, 83b) for receiving the occupant's arms.

4. An airbag system comprising an airbag and an inflator for inflating the airbag, wherein the airbag is the airbag according to one of Claims 1 to 3.

## Patentansprüche

1. Airbag, der sich vertikal vor einem Insassen entfaltet, wobei
der Airbag ein Zwischenteil (82) und obere und untere Teile (81, 83) hat, das Zwischenteil (82) eine relativ schmale seitliche Breite (W2), und die oberen und unteren Teile (81, 83) während der Entfaltung eine größere seitliche Breite (W1, W3) aufweisen als das Zwischenteil (82); und
die seitliche Breite eine Beziehung hat, ausgedrückt als W2 < W1 < W3
wobei W1 die maximale seitliche Breite des oberen Teils (81),
W2 die minimale seitliche Breite des Zwischenteils (82), und
W3 die maximale seitliche Breite des unteren Teils (83) ist,
wobei:
a) der Airbag lediglich zwei Platten aufweist, eine Frontplatte (80B) und eine Rückplatte (80A),
b) die Frontplatte (80B) und die Rückplatte (80A) jeweils Seiten (1, 2, 3, 11, 12, 13) aufweisen mit:
b1) linearen Vorderfrontseiten (1f, 3f, 11f, 13f),
b2) Fronten (1f, 3f', 11f', 13f') der Seiten (1, 2, 3, 11, 13), wobei die Fronten zusammenhängend mit den Vorderfrontseiten (1f, 3f, 11f, 13f) sind und jeweils zu den Mitten der Front- und Rückplatten (80B, 80A) hin gekrümmt sind, und
b3) Rückseiten (1r, 3r, 11r, 13r), die sich von den gekrümmten Fronten (1f', 3f', 11f', 13f') erstrecken
c) die Frontplatte (80B) ferner eine Seite (14) aufweist, mit:
c1) einem rechteckigen Vorsprung (15) in der Mitte, wobei der Vorsprung (15) Seiten (15a, 15b) aufweist, die sich zur Seite (14) der Frontplatte (80B) fortsetzen, und eine Seite (15c), die die Seiten (15a, 15b) des Vorsprungs (15) verbindet, und
c2) Seiten (14a, 14b) zwischen beiden Seiten (15a, 15b) des Vorsprungs (15) und den Rückseiten (11r, 13r), wobei die Seiten (14a, 14b) mit den angrenzenden Seiten (15a, 15b) des Vorsprungs (15) vernäht sind,
d) die Rückplatte (80A) ferner eine Seite (4) aufweist, die sich von den Rückseiten (1r, 3r) erstreckt und die aufweist:
d1) einen rechteckigen Schnitt (5) in der Mitte und
d2) Seiten (4a, 4b) an beiden Seiten (51, 53) des Schnitts (5), wobei die Seiten (4a, 4b) an beiden Seiten (51, 53) des Schnitts (5) zusammengenäht sind,
e) die Frontplatte (80B) und die Rückplatte (80A) entlang ihrer Umfänge zusammengenäht sind mit
e1) Nähten (20, 21), die die linearen Vorderfrontseiten (1f, 3f, 11f, 13f) und die gebogenen Fronten (1f', 3f', 11f', 13f') der Frontplatte (80B) und der Rückplatte (80A) verbinden, wobei das Zwischenteil (82) aufgrund der gekrümmten Fronten (1f', 3f', 11f', 13f') mit einer schmalen seitlichen Breite (W2) ausgebildet sein kann, und
e2) einer Naht (48), die die Rückplatte (80A) an den sich von den gekrümmten Fronten (1f', 3f') erstreckenden Rückseiten (1r, 3r) und die Frontplatte (80B) an der die Seiten (15a, 15b) des Vorsprungs (15) verbindenden Seite (15c) verbindet.

2. Airbag nach Anspruch 1, wobei W1 um 50 bis 100 mm größer ist als W2, und W3 um 100 bis 150 mm größer ist als W1.

3. Airbag nach Anspruch 1 oder 2, wobei das untere Teil (83) seitlich vorstehende Abschnitte (83a, 83b) für die Aufnahme der Arme von Insassen aufweist.

4. Airbagsystem mit einem Airbag und einem Gasgenerator zum Aufblasen des Airbags, wobei der Airbag ein Airbag nach einem der Ansprüche 1 bis 3 ist.

## Revendications

1. Airbag gonflable verticalement devant un passager,
ledit airbag présentant une partie intermédiaire (82), une partie supérieure et une partie inférieure (81, 83), la partie intermédiaire (82) ayant une largeur latérale (W2) relativement réduite, et la partie supérieure et la partie inférieure (81, 83) ayant chacune une largeur latérale (W1, W3) supérieure à celle de la partie intermédiaire (82) pendant le gonflement ; et
la relation entre les largeurs latérales étant exprimée par W2 < W1 < W3,
W1 étant la largeur latérale maximale de la partie supérieure (81),
W2 étant la largeur latérale minimale de la partie intermédiaire (82), et
W3 étant la largeur latérale maximale de la partie inférieure (83),
où :
a) l'airbag est pourvu de deux panneaux seulement, en l'occurrence un panneau avant (80B) et un panneau arrière (80A),
b) le panneau avant (80B) et le panneau arrière (80A) ont chacun des côtés (1, 2, 3, 11, 12, 13) avec :
b1) des côtés linéaires frontaux (1f, 3f, 11f, 13f)
b2) des faces (1f', 3f', 11f', 13f') des côtés (1, 3, 11, 13), lesdites faces étant contiguës aux côtés linéaires frontaux (1f, 3f, 11f, 13f) et étant incurvées vers les centres respectifs du panneau avant et du panneau arrière (80B, 80A), et
b3) des côtés arrière (1r, 3r, 11r, 13r) s'étendant depuis les faces incurvées (1f', 3f', 11f', 13f'),
c) le panneau avant (80B) présentant en outre un bord (14) avec :
c1) un pan rectangulaire (15) au centre, ledit pan (15) ayant des côtés (15a, 15b) s'étendant vers le bord (14) du panneau avant (80B), et un côté (15c) reliant les côtés (15a, 15b) du pan (15), et
c2) des côtés (14a, 14b) entre les deux côtés (15a, 15b) du pan (15) et les côtés arrière (11r, 13r), lesdits côtés (14a, 14b) étant cousus avec les cotés adjacents (15a, 15b) du pan (15),
d) le panneau arrière (80A) présentant en outre un bord (4) s'étendant depuis les côtés arrière (1r, 3r) et ayant :
d1) une découpe rectangulaire (5) au centre, et
d2) des côtés (4a, 4b) sur les deux côtés (51, 53) de la découpe (5), lesdits côtés (4a, 4b) sur les deux côtés (51, 53) de la découpe (5) étant cousus l'un avec l'autre,
e) le panneau avant (80B) et le panneau arrière (80A) étant cousus l'un avec l'autre sur leur périphérie par
e1) des coutures (20, 21) raccordant les côtés linéaires frontaux (1f, 3f, 11f, 13f) et les faces incurvées (1f', 3f', 11f', 13f') du panneau avant (80B) et du panneau arrière (80A), la partie intermédiaire (82) avec une largeur latérale (W2) réduite pouvant être formée en raison de la présence des faces incurvées (1f', 3f', 11f', 13f'), et
e2) une couture (48) raccordant le panneau arrière (80A) sur les côtés arrière (1r, 3r) s'étendant depuis les faces incurvées (1f', 3f'), avec le panneau avant (80B) sur le côté (15c) reliant les côtés (15a, 15b) du pan (15).

2. Airbag selon la revendication 1, où W1 est de 50 à 100 mm plus grande que W2, et W3 est de 100 à 150 mm plus grande que W1.

3. Airbag selon la revendication 1 ou la revendication 2, où la partie inférieure (83) comporte des parties en saillie latérale (83a, 83b) pour la réception des bras du passager.

4. Système d'airbag comprenant un airbag et un générateur de gaz pour le gonflement de l'airbag, où l'airbag est l'airbag selon l'une des revendications 1 à 3.
